# EUROPEAN PATENT APPLICATION

(11) **EP 4 804 146 A1**
(43) Date of publication of application: **09.09.2026**
(21) Application number: 25305290.6
(22) Date of filing: 04.03.2025
(51) Int. Cl.: G06V 10/98, G06V 40/16, G06V 40/50, G06V 40/70

(54) **METHOD AND SYSTEM FOR OPERATING A TOUCHPOINT**

(71) Applicant: Amadeus S.A.S., 06410 Biot (FR); ICM Airport Technics Pty Ltd., Botany, NSW 2019 (AU)
(72) Inventor: ABRAHAM, Eldho, Sydney (AU); LANDGREBE, Thomas, Sydney (AU); MERRITT, Joshua, Sydney (AU)
(74) Representative: Samson & Partner Patentanwälte mbB

(57) **Abstract**

A method for operating a touchpoint, the method comprising a biometric authentication system:
receiving authentication biometric data;
associating the authentication biometric data with a person;
obtaining a pre-computed risk score associated with the person;
determining whether the risk score exceeds an authentication risk threshold;
operating the touchpoint to perform biometric authentication using the authentication biometric data in the event that the pre-computed risk score does not exceed the authentication risk threshold; and
operating the touchpoint with an enhanced authentication routine in the event that the pre-computed risk score exceeds the authentication risk threshold.

## Description

### FIELD OF THE INVENTION

The present invention relates generally to touchpoints such as those that are located at airports and other mass transit points. More specifically, the present invention relates to methods and systems for operating touchpoints in the course of performing biometric authentication processes.

### BACKGROUND TO THE INVENTION

There has been steady progress towards using biometrics at authentication touchpoints; especially boarding gates. Biometric authentication performed at boarding gates involves 'one-to-many' biometric recognition (typically facial recognition) where an image of the traveller's face is compared against a gallery of facial images taken of persons who are expected to be present at the boarding gate. In some cases, this allows the traditional boarding pass to be replaced with the action of presenting biometric data (such as a facial image). During aircraft boarding, the biometric data can serve a dual role of controlling access to an aircraft and recording a visa holder's departure from a country.

Basic facial recognition involves converting images of the faces to be compared to numeric representations (known as 'facial embeddings') and numerically comparing the facial embeddings. The facial embeddings are typically generated from the facial images by a deep learning network. In a one-to-mayThe embedding with the least difference is returned as a potential match. The match score is often compared to a threshold in order to improve confidence in the score. Generally, when comparing two facial embeddings, a score with a lower magnitude equates to when the embeddings are closer together and the faces match. Conversely, a score with a high magnitude equates to when the embeddings are further apart and the faces do not match.

The rate at which false positives occur is known as the false positive identification rate (FPIR). In a biometric test, FPIR is estimated by conducting non-mated searches into an enrolled population. A non-mated search refers to a search operation where the system is tasked with finding faces that do not match a specific query face. Unlike a mated search, which seeks identical or highly similar faces to a given query, a non-mated search looks for faces that are dissimilar or unrelated to the query face. FPIR is often defined as the number of searches resulting in a false positive divided by the number of non-mated searches performed.

Boarding a single aircraft might typically require authentication of 400 people, but a security gate that leads to dozens or hundreds of flights needs to deal with potentially tens of thousands of people. This has the potential to result in false positives in the matching between current biometric details (image of face) and a large database (or gallery) of stored biometric details.

Current vendors claim an accuracy between 95 and 99% based on a pre-assigned FPIR/FNIR threshold. In other words, the threshold may be reduced to get a better accuracy rate, risking more rejections/false negatives in order to avoid false positives. In the context of aircraft boarding, a false positive is much more of a problem than a false negative because there is a secondary treatment for those with a false negative, which is for an agent to view the passenger's passport and boarding pass. A false positive means that a person passes the touchpoint based on someone else's details and is more likely to be a basis for fraud.

The present invention aims to provide an alternative method of performing biometric authentication at touchpoints

### SUMMARY OF THE INVENTION

According to a first aspect of the present disclosure there is provided a method for operating a touchpoint, the method comprising a biometric authentication system: receiving an authentication biometric; associating the authentication biometric with a person; obtaining a pre-computed risk score distribution associated with the person; determining whether the risk score distribution exceeds an authentication risk threshold; operating the touchpoint to perform biometric authentication using the authentication biometric in the event that the risk score distribution does not exceed the authentication risk threshold; and operating the touchpoint with an enhanced authentication routine in the event that the risk score distribution exceeds the authentication risk threshold.

In one embodiment, the risk score is computed by a biometric enrolment system: receiving an enrolment biometric; entering the enrolment biometric into a biometric gallery that comprises one or more gallery biometrics; generating one or more supplementary biometrics from the enrolment biometric; entering the one or more supplementary biometrics into the biometric gallery; and computing the risk score from results of biometric comparison operations performed between the enrolment biometric and one or more of the supplementary biometrics and one or more of the gallery biometrics.

Generating one or more supplementary biometrics from the enrolment biometric may comprise inputting the enrolment biometric and supplementary biometric generation input data to a generative machine learning model. The supplementary biometric generation input data may comprise journey context data associated with a person to whom the enrolment biometric pertains. The journey context data in some embodiments comprises a time window when the person is expected to be present at the touchpoint. The supplementary biometric generation input data may also comprise lighting conditions, optical characteristics of a camera integrated in or associated with the touchpoint, and data pertaining to a facial expression corresponding to an emotional state.

In some embodiments, the enhanced authentication routine comprises operating the touchpoint to require the person to undergo a non-biometric authentication routine, such as the person scanning a document at the touchpoint or presenting a document to a human agent.

The biometric authentication using the authentication biometric may comprises comparing the authentication biometric against biometrics in a biometric gallery of enrolled biometrics.

According to a second aspect of the present invention, there is provided a biometric enrolment method comprising a biometric enrolment system: receiving an enrolment biometric; entering the enrolment biometric into a biometric gallery that comprises one or more gallery biometrics; generating one or more supplementary biometrics from the enrolment biometric; entering the one or more supplementary biometrics into the biometric gallery; computing a risk score from results of biometric comparison operations performed between the enrolment biometric and one or more of the supplementary biometrics and one or more of the gallery biometrics; and in the event that the risk score exceeds an authentication risk threshold performing an enhanced biometric enrolment operation.

In one embodiment, the enhanced biometric enrolment operation comprises the biometric enrolment system extracting additional biometric features from the enrolment biometric. In another embodiment, the enhanced biometric enrolment operation comprises the biometric enrolment system transmitting instructions to a mobile device application directing the sender of the enrolment biometric to capture an enhanced enrolment biometric and send the enhanced enrolment biometric to the biometric enrolment system.

Generating one or more supplementary biometrics from the enrolment biometric may comprise inputting the enrolment biometric and supplementary biometric generation input data to a generative machine learning model. The supplementary biometric generation input data may comprise journey context data associated with a person to whom the enrolment biometric pertains, such as a time window when the person is expected to be present at a touchpoint to undergo biometric authentication.

The supplementary biometric generation input data can also comprise lighting conditions, optical characteristics of a camera integrated in or associated with a touchpoint, and data pertaining to a facial expression corresponding to an emotional state.

### BRIEF DESCRIPTION OF THE DRAWINGS

An embodiment of the present invention will be described with reference to the accompanying drawings in which:
Figure 1 is a high-level schematic representation of an aspect of the present invention.
Figure 2 is a schematic illustration illustrating a process by which a passenger utilises a biometric enrolment application to enrol in a biometric system.
Figure 3 is a schematic illustration of processes conducted by a biometric authentication system to authenticate passengers.
Figures 4A and 4B are schematic illustrations of exemplary processes for quantifying the riskiness of a biometric gallery.
Figure 5 is a schematic illustration of processes for computing risk distributions for biometric galleries according to embodiments of the present invention.
Figure 6 is a schematic illustration of processes conducted by a biometric enrolment system to generate supplementary biometrics.
Figure 7 is a schematic illustration of a biometric authentication system performing biometric authentication.
Figure 8 illustrates an exemplary algorithm that a biometric authentication system in accordance with an embodiment of the invention executes when a passenger presents at a touchpoint seeking access to a facility that the touchpoint controls.
Figures 9-11 illustrate examples of enhanced authentication in accordance with embodiments of the present invention.
Figure 12 is a is a block diagram of a computer system suitable for implementing an embodiment of the present invention.

### DETAILED DESCRIPTION OF THE DRAWINGS

In the following detailed description, reference is made to accompanying drawings which form a part of the detailed description. The illustrative embodiments described in the detailed description and depicted in the drawings, are not intended to be limiting. Other embodiments may be utilised and other changes may be made without departing from the spirit or scope of the subject matter presented. It will be readily understood that the aspects of the present disclosure, as generally described herein and illustrated in the drawings can be arranged, substituted, combined, separated and designed in a wide variety of different configurations, all of which are contemplated in this disclosure.

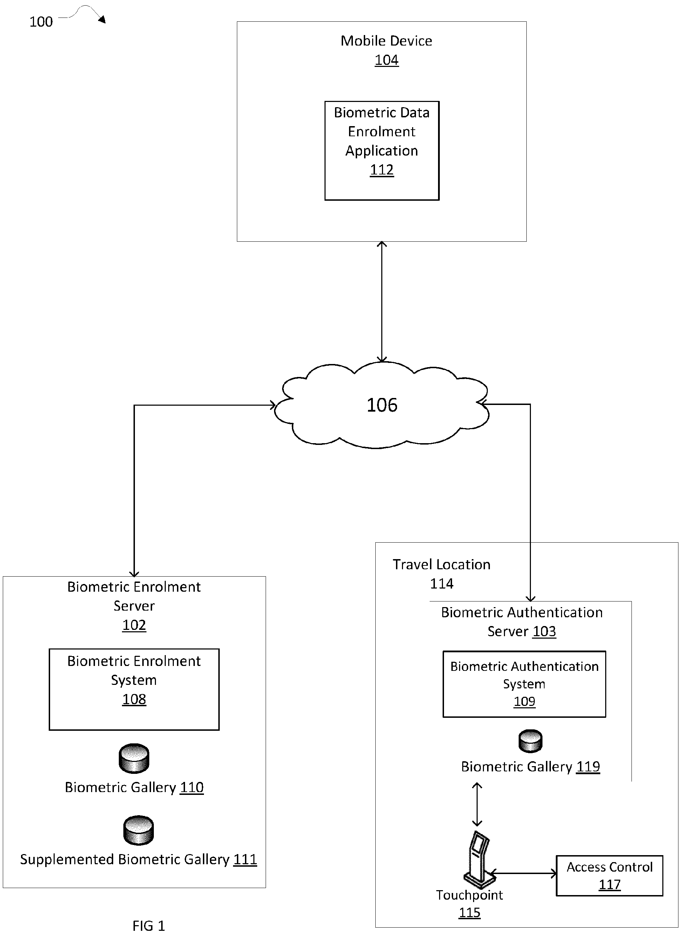

FIG. 1 illustrates a computing environment 100 in which aspects of the present invention are implemented. The environment 100 is a networked environment comprising a biometric enrolment server 102, a biometric authentication server 103 and a mobile device 104. The biometric enrolment server 102 and mobile device 104 are communicatively coupled over one or more communication networks 106. The biometric authentication server 103 is physically located at a travel location 114 or is in network communication therewith, by way of the communication network 106. The biometric enrolment server 102 and biometric authentication server 103 are typically also in network communication by way of the communication network. 103.

In the exemplified embodiment, travel location 114 is an airport, however those skilled in the art will appreciate that the present invention could readily be implemented at other mass transit locations, such as rail or sea departure points. As described in further detail below, a biometric authentication system 109 executing on the biometric authentication server 103 allows passengers to interact with touchpoints 115 installed at the travel location using biometrics. A single touchpoint 115 is illustrated in Figure 1, however in a typical environment (such as an airport), many more touchpoint devices are installed to accommodate the number of passengers passing through the travel location 114.

In the exemplified embodiment, touchpoint 115 is a kiosk with a touchscreen, in-built or external facial recognition camera, passport and boarding pass scanners, and boarding pass and bag tag printer. In the exemplified embodiment, touchpoint 115 forms part of an access control system where biometric authentication is used to operate an access control measure 117 such as a boarding gate or entry point gate serving passengers from multiple flights. As described in further detail below, utilising a touchpoint (such as touchpoint 115) as a biometric frontend to an access control measure 117 allows, for example, the traditional boarding pass to be replaced with a process involving the passenger presenting a biometric (such as a face) to a camera. Where the travel location 114 is an international airport, the presented biometric serves a double role of traversing an access control measure to board an aircraft and facilitating a visa holder recording their departure from a country.

The biometric enrolment server 102 executes an application 108 (referred to hereinafter as a "biometric enrolment system") that facilitates passengers to consent to the use of biometric authentication procedures at the travel location 114 and provide a biometric (referred to hereinafter as an "enrolment biometric") for use in such procedures. The passenger typically utilises a biometric enrolment application 104 executing on mobile device 104 to interact with the biometric enrolment system 108.

As discussed in further detail below, biometric enrolment system 108 constructs and maintains a biometric gallery 110 for later use in the biometric authentication procedures conducted at travel location 114. Biometric authentication server 103 also maintains a biometric gallery 119 to perform such biometric authentication procedures.

Both the biometric enrolment server 102 and biometric authentication server 103 have been illustrated as single systems. Servers 102 and 103 could however be scalable server systems, each comprising multiple nodes which can be commissioned/decommissioned based on processing demands. Typically, server systems are server computers that provide greater resources (e.g. processing, memory, network bandwidth) in comparison with the computers that function as client systems, such as the mobile device 104.

In the illustrated embodiment, biometric galleries 110 and 119 are illustrated as part of the respective biometric enrolment server 102 and biometric authentication server 103. However, biometric galleries 110 and 119 could be separate systems in operative networked communication with the respective biometric enrolment server 102 and biometric authentication server 103. To a large extent, the network architecture and design of the biometric galleries 110 and 119 is strongly motivated by operative data privacy and security regimes applying to systems that manage biometric data. Such regimes cover aspects such as access control and retention of biometric data of the kind that is used in biometric authentication procedures.

As exemplified in further detail below, the biometric enrolment system 108 performs various operations in response to receiving data from the biometric enrolment application 112. As such, when executed by the biometric enrolment server 102, the biometric enrolment system 108 configures the biometric enrolment server 102 to provide server-side functionality to the biometric enrolment 112. To provide this functionality, the biometric enrolment system 108 comprises one or more suitable application programs, libraries, or other software infrastructure.

Biometric enrolment application 112 can be provided as a standalone application or in conjunction with an airline application that facilitates booking, flight management, online check-in and the like. Where the biometric enrolment application 112 is a web application that is executed by a web browser, the biometric enrolment system 108 will typically be, or interact with, a web server such as a server implemented with the node.js runtime environment. Where the biometric enrolment application 112 is a native application executing on the mobile device 104, the biometric enrolment system 108 will typically be, or interact with, an application server. Biometric enrolment server 102 may be provided with both web server and application server applications to enable it to serve both web browser and native client applications.

The biometric authentication server 103 is typically in operative network communication with server infrastructure that executes one or more departure control systems. In other embodiments, one or more departure control systems execute on biometric enrolment server 103 or are integrated with the biometric authentication system 109. The departure control systems manage various aspects of passenger processing and flight departure procedures, and include modules that implement functions such as: passenger check-in, baggage handling, flight manifest, security checks, boarding, communication, flight reconciliation, flight documentation, standby and upgrades, flight messaging, irregular operations, and reporting and analytics.

The biometric enrolment server 102 and mobile device 104, as well as the biometric enrolment server 102 and biometric authentication server 103, respectively communicate data between each other either directly or indirectly through one or more communications networks 106. Communications network 106 may comprise a local area network (LAN), a public network (such as the Internet), or a combination of networks.

While only one mobile device 104 is depicted in environment 100, a typical environment would typically include many more mobile devices served by the biometric enrolment system 108.

While the mobile device 104 is described as "mobile" it could also be a less mobile type of computer system, such as a desktop computer. However, the mobile device is more likely to be a mobile computer such as a laptop computer, smartphone or tablet device. When executed by the mobile device104, the biometric enrolment application 112 configures the mobile device 104 to implement client-side functionality that facilitate the user of the mobile device 104 to consent to the use of biometric authentication procedures at the travel location 114 and provide an enrolment biometric for use in such procedures.

As noted above, the biometric enrolment application 112 may be provided to the mobile device 104 as a web application that is executed by a general web browser application (such as Chrome, Edge, Safari or the like) that is installed thereon. When provided as a web application, the biometric enrolment application 112 accesses the biometric enrolment system 108 via an appropriate uniform resource locator (URL) and communicates with the biometric enrolment system 108 via general world-wide-web protocols (e.g. http, https, ftp) and application programming interfaces (APIs) (e.g. REST APIs). Alternatively, when the biometric enrolment application 112 is a native application, it is typically programmed to communicate with the biometric enrolment system 108 using defined API calls.

A given mobile device 104 may have more than one client application 112 installed thereon, for example both a general web browser application and a dedicated programmatic client application.

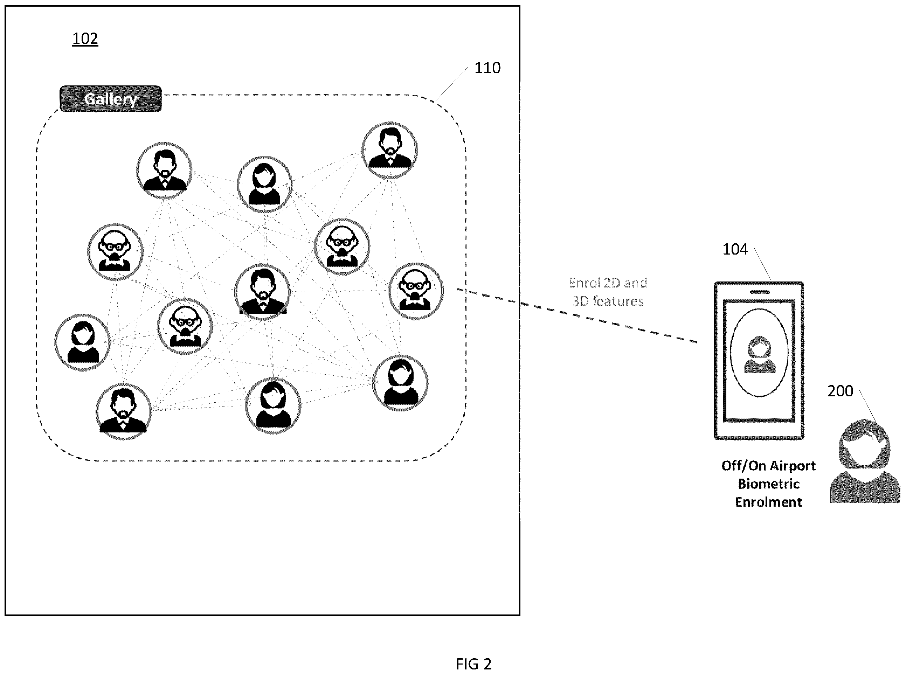

Turning to Figure 2, the process by which a passenger 200 uses biometric enrolment application 112 on their mobile device 104 to enrol in the biometric system operated by biometric enrolment system 108 is illustrated. Biometric enrolment can take place at or remote from travel location 11. For example, biometric enrolment system 108 may enrol passenger 200 into a biometric system at the time that the passenger checks into their flight, potentially using the biometric enrolment application 112 to do so. After the biometric enrolment application receives and validates necessary documentation, such as passport and identification documents (typically against an authoritative government database), the biometric enrolment application 112 displays a user interface on mobile device 104 that instructs the passenger 104 to upload a facial image to the biometric enrolment system 108 to enrol that image (or a representation thereof) in the biometric system. Typically, the facial image is a "selfie" that the passenger 104 takes using the in-built camera of mobile device 104. The enrolled facial image (or representation thereof) is hereinafter referred to as an "enrolment biometric". As illustrated in Figure 2, the enrolment biometric may include both two-dimensional and three-dimensional facial features that are captured using the in-built camera of mobile device 104. For example, mobile device 104 may include an infrared camera and sensor that are used to capture three-dimensional facial features of the passenger 104.

Upon receipt of the enrolment biometric, the biometric enrolment system 108, after performing any necessary preprocessing, normalising, scaling and the like, inputs the enrolment biometric to a trained machine learning model. The trained machine learning model processes the enrolment biometric and generates an embedding vector of floating-point facial features. **In** the exemplified embodiment, the embedding vector is a 512-dimensional vector of floating-point values.

Passenger 200 is enrolled into biometric gallery 110, with the relevant enrolment record typically including, amongst other fields, the embedding vector generated from the enrolment biometric. As illustrated in Figure 2, biometric gallery 110 includes records for multiple other passengers who have enrolled into the relevant biometric-controlled event. For example, in some embodiments biometric gallery 110 comprises all passengers who have checked into a particular flight. **In** other embodiments, biometric enrolment system 108 automatically constructs a biometric gallery to enable touchpoint 115 to manage more complicated travel scenarios. For example, where touchpoint 115 manages an entry or exit gate controlling access to a particular area of the airport (such as an area where pre-security checks are conducted), biometric enrolment system 108 constructs a biometric gallery comprising passengers from multiple flights who are expected to pass touchpoint 115 during a specific time period. Biometric enrolment system can construct biometric galleries by performing merging and/or filtering operations and the like on individual galleries.

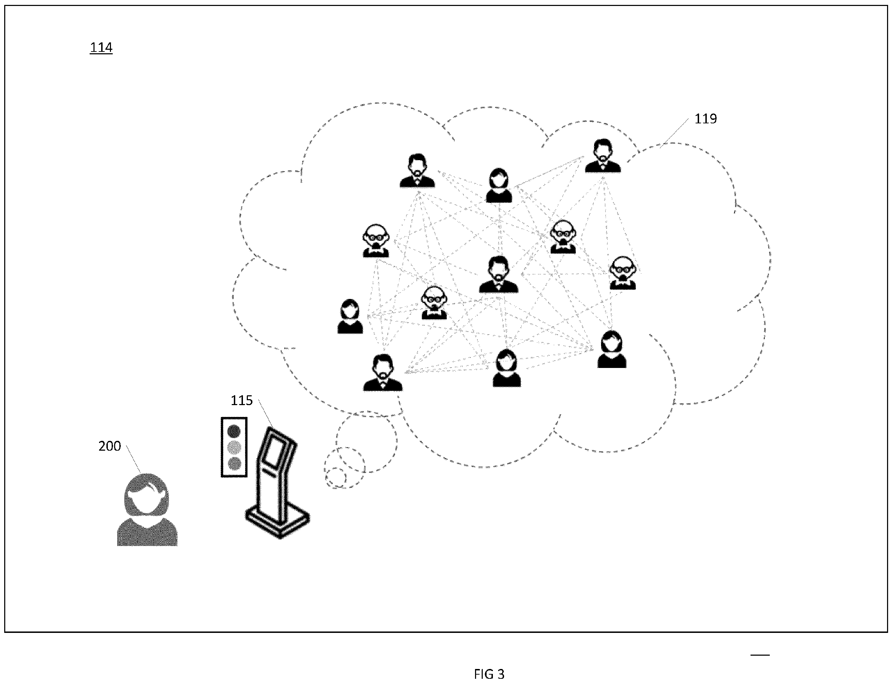

Turning to Figure 3, the processes conducted by the biometric authentication system 109 to authenticate passenger 200 are illustrated. Those skilled in the art will appreciate that biometric authentication occurs after passenger 200 has enrolled for biometric authentication, which may be signified by passenger 200 being a member of a biometric gallery. Figure 3 illustrates the passenger 114 undergoing biometric authentication before being permitted to board an aircraft, however those skilled in the art will appreciate that the exemplified processes could equally be used for biometric authentication of other activities such as entry or exit gates or security screening.

As illustrated in Figure 3, when passenger 200 arrives at the boarding gate that touchpoint 114 is controls, touchpoint 114's integrated camera captures a facial image of passenger 200. Facial images (or other biometrics) captured during a biometric authentication process are hereinafter referred to as "authentication biometrics". Touchpoint 114 then transmits the captured authentication biometric to biometric authentication system 109.

Upon receipt of the authentication biometric, biometric authentication system 109 submits the authentication biometric to a trained machine learning model that generates an embedding vector therefrom. Biometric authentication system 109 then mathematically compares the generated embedding vector to the embedding vector for each passenger in biometric gallery 119. These comparison operations are schematically illustrated in Figure 3 by the dotted lines that indicate that during the process of biometric authentication, the embedding vector for each passenger in the gallery is compared to the embedding vector of each other passenger in the gallery.

The result of each comparison is typically a numerical value with an interpretation and scale that is dictated by the particular comparison operation used. In some embodiments, the numerical comparison results are transformed or mapped to an external scale. In any event, biometric authentication system 109 ranks the comparison results from the closest embedding vector in biometric gallery 119 to the one furthest away. The embedding vector with the highest rank is considered by biometric authentication system 109 as potentially the same person who submitted the authentication biometric. Biometric authentication system 109 typically makes a conclusive determination in this regard if the comparison result exceeds a predetermined threshold. This threshold can be tailored in accordance with the security environment in which touchpoint 115 operates. In this regard, a higher threshold is set for security environments that demand very high certainty in facial recognition operations.

Determining that the person who submitted the authentication biometric is the same person who underwent biometric enrolment into biometric gallery 119 allows biometric authentication system 109 to permit passenger 200 to board the aircraft without further checks (such as producing a boarding pass). This is due to the biometric enrolment procedures discussed above that enrol passenger 200 into a biometric gallery and link the submitted enrolment biometric to the boarding pass that is issued after completion of online check-in procedures.

The comparison operations performed during biometric authentication are known as 1:N authentication, where a single authentication biometric is compared against each enrolment biometric present in a biometric gallery, where N is the number of enrolment biometrics present. For biometric authentication performed at particular touchpoints (such as those controlling entry or exit gates servicing multiple flights) biometric gallery sizes may comprise several thousand enrolment biometrics. Incidents of false positives reflected in the FPIR (false positive identification rate) and false negatives reflected in the FNIR (false negative identification rate) have been reported as being more common with large gallery sizes. False negatives occur where a biometric authentication system fails to recognise a person who has enrolled into a biometric gallery. Likewise, false positives occur where a biometric authentication system incorrectly identifies a person who submits an authentication biometric as a person who has enrolled into a biometric gallery. For example, a false positive occurs where a person is permitted to board a flight or enter a part of the airport for which they do not have authorisation.

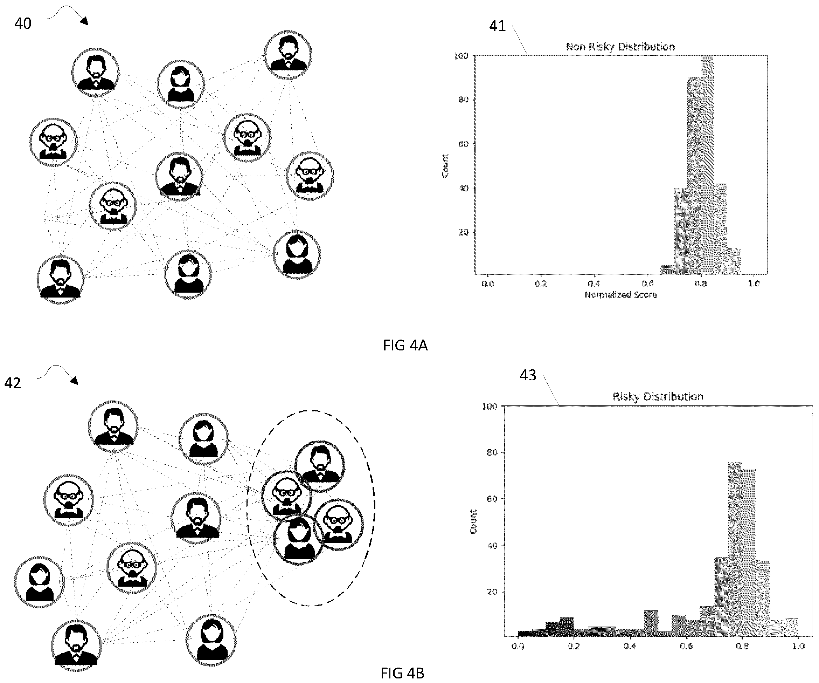

Figures 4A and 4B illustrate exemplary processes for quantifying the "riskiness" of a biometric gallery. The process is typically conducted after the expected passengers have enrolled into the biometric gallery, but before the biometric authentication system 109 utilises the biometric gallery to perform authentication. The result of the process illustrated in Figures 4A and 4B is utilised to minimise incidents of false positives and false negatives occurring at the time of biometric authentication, even for larger gallery sizes.

In the illustrated embodiment, gallery-risk quantification involves comparing each enrolled biometric in the gallery to each other enrolled biometric in the gallery. The comparison process is the same as that discussed above in the context of biometric authentication, namely involving mathematically comparing each biometric's embedding vector against the embedding vectors of each other biometric in the biometric gallery. The results of the individual comparison operations (which for a gallery size of N biometrics comprises N(N-1)/2 unique scores) are stored in a pairwise comparison matrix with rows and columns representing individual biometrics and matrix elements storing the result of comparing biometrics located at a particular row and column.

Figure 4A illustrates a gallery-risk quantification performed on biometric gallery 40. In the illustrated embodiment, the comparison scores are characterised in histogram 41. Each bar in histogram 41 represents the frequency of a particular score in the total set of comparison scores. Histogram 41 illustrates a less risky biometric gallery, with a score distribution more concentrated with higher normalised scores. Higher normalised scores reflect pairs of uniquely enrolled biometrics that are distinct enough not to trigger a false positive identification.

Figures 4B illustrates a gallery-risk quantification performed on biometric gallery 42. In Figure 4B, the distribution of scores in characterising histogram 43 is more concentrated with lower normalised scores. Lower normalised scores reflect pairs of biometrics that have greater similarity. During authentication, these similar biometrics are at higher risk of triggering a false positive identification.

Performing gallery-risk quantification enables individual biometrics to be identified and flagged as risky. Individual biometrics that, when compared, result in lower normalised scores are typically identified as risky in this regard. In the illustrated embodiment, the biometric enrolment system 102 utilises a configurable threshold score, below which compared biometrics are identified as risky. This is illustrated in Figure 4B with the four biometrics circumscribed by a dashed ellipse.

As described in greater detail below, biometrics that are identified as risky are recorded in the biometric authentication system 109 in order to launch enhanced authentication procedures at the time of authentication.

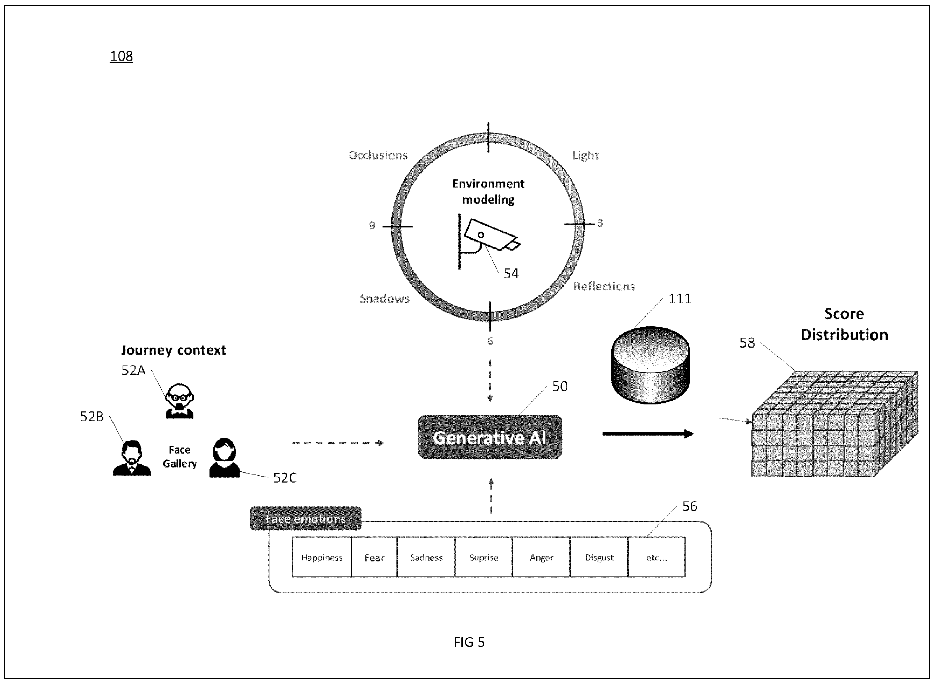

Turing to Figure 5, a further embodiment of processes for computing risk distributions for biometric galleries and flagging individual biometrics as risky is illustrated. In broad terms, the process involves submitting engineered inputs to a generative AI model 50 that cause the model to generate additional facial images (or other biometrics) to supplement those already in the biometric gallery. These additional facial images are referred to hereinafter as "supplementary biometrics". As described in further detail below, risk distributions that are computed from biometric galleries supplemented with supplementary biometrics are useful in predicting the risk of false positives or false negatives occurring during a later biometric authentication process. **In** turn, predicting the risk of false positives or false negatives ahead of time allows the biometric authentication process to be responsively controlled to account for the predicted risk.

Increasing the size of the biometric gallery by including multiple images for each enrolled person also has been reported as lowering the incidents of false negatives.

As illustrated in Figure 5, one input to generative AI model 50 is the journey context of each person 52A-52C enrolled in the relevant biometric gallery. Journey context refers to the temporal and geographical characteristics of (in the case of an airport) the person's flight. Such characteristics include the origin, destination and length of the flight, and the expected flight arrival time.

Other inputs to generative AI model 50 are the optical characteristics of the cameras 54 that are used for biometric authentication. As described above, such cameras are often integrated into the touchpoints (for example touchpoint 114) that perform the biometric authentication process. Inputting both journey context and camera characteristics essentially conditions generative AI model 54 to model the likely environment where the biometric authentication will take place. In this way, generative AI model 50 is conditioned to generate supplementary biometrics that accurately predict how that person will appear in a facial image that a camera captures at the time of biometric authentication.

In this regard, as illustrated in Figure 5, when the person's flight arrives or departs during daytime, the lighting environment at the airport may include incidents of strong lighting, shadows, reflections and occlusions that may impact on the characteristics of a facial photograph taken in such an environment. Likewise, when the person's flight arrives or departs during nighttime, a different lighting environment may prevail. Inputting the journey context and camera characteristics to AI model 50 conditions the model to generate supplementary biometrics that accurately reflect a facial image of the person that the camera will capture at the time of biometric authentication.

Another input to generative AI model 50 are textual or image prompts 56 that condition the model 50 to generate facial images that embody different emotions and/or affects. In the illustrated embodiment, the range of emotions are happiness, fear, sadness, surprise, anger and disgust, although those skilled in the art will appreciate that other emotions or affects could also be used. Inputting emotional range characteristics to the generative AI model 50 conditions the model to generate supplementary biometrics that encode a range of variabilities of how the person's face will appear at the time of biometric authentication. Current face recognition algorithms require the person to have a neutral face expression. Generative methods that produce a range of emotional characteristics assist in performing face recognition that is agnostic to the person's facial expression at the time the recognition is performed.

After generative AI model 50 has generated supplementary biometrics for each, or for selected, persons enrolled in biometric gallery 110, the biometric enrolment system 108 adds the supplementary biometrics to the biometric gallery 110, to produce a supplemented biometric gallery 111. The biometric enrolment system 108 computes a score distribution 58 that pertains to the supplemented biometric gallery 50. In one embodiment, biometric enrolment system 108 computes the score distribution by comparing each enrolment biometric to each of the other biometrics (i.e both enrolment biometrics and supplementary biometrics) present in the supplemented biometric gallery 111. The biometric enrolment system 108 may input the supplementary biometrics (and if necessary the enrolment biometrics) to a machine learning model to convert the supplementary biometrics to embedding vectors prior to performing the comparison operations.

As illustrated in Figure 5, score distribution 58 can take the form of a three-dimensional tensor, with each two-dimensional matrix in the tensor storing the comparison results for one enrolment biometric against each of the other biometrics in the supplemented biometric gallery 111. In this way, each two-dimensional matrix can be considered as a risk score distribution for an enrolment biometric and by extension for the individual associated with the enrolment biometric.

As well as storing the numerical comparison scores for the enrolment biometric against the other biometrics in the supplemented biometric gallery, the two-dimensional matrix stores other characteristics of the comparisons, such as whether the comparison is against another enrolment biometric or against a supplementary biometric, and whether the comparison is against an image of the same person associated with the enrolment biometric or against an image of a different person. Where the enrolment biometric is compared against a supplementary biometric, the two-dimensional matrix stores details about the properties of the supplementary biometric (referred to hereinafter as "supplementary biometric property data"). Supplementary biometric property data includes attributes of the supplementary biometric such as the person associated with the supplementary biometric and the particular inputs to the generative ai model 50 (including journey context, camera characteristics and emotional range) that were used to generate the supplementary biometric.

For example, one row of the two-dimensional matrix can be used to store comparison scores pertaining to comparing the enrolment biometric against a plurality of supplementary biometrics generated by inputting one or more emotional states to the generative ai model 50. Another row of the two-dimensional matrix can be used to store comparison scores pertaining to comparing the enrolment biometric against a plurality of supplementary enrolment biometrics generated by inputting particular light conditions and/or camera characteristics to the generative ai model 50.

The biometric enrolment system 108 is configured to perform data analysis on the score distribution 58 to gain insights about the structure and riskiness of the supplemented biometric gallery 11. In this regard, data analysis routines include ranking the comparison scores generated when comparing each enrolment biometric against other biometrics in the supplemented biometric gallery, and performing clustering analysis to identify faces that have similar appearances. The data analysis routines also compute a risk score for each enrolment biometric. For example, clustering analysis can be used to identify enrolment biometrics that are at risk of triggering a false negative at the time of biometric authentication. Such biometrics can be identified by analysing the distribution of comparison scores when an enrolment biometric is compared against supplementary biometrics of the same person. If the distribution of comparison scores reflect an outcome that differs from the known outcome (namely when the comparison scores reflect that the enrolment biometric and supplementary biometrics come from different people), the enrolment biometric is assigned a risk score indicating a higher risk of triggering a false positive.

Context is used along with generative ai model 50 to generate face images from a single source. The images are generated in such a way that the distance of the current source from rest of the enrolled images in the gallery is maximized, but at the same time, it resembles the source as much as possible.

The inputs to the generative ai model 50 described above, along with the context and source image, include a loss computation module, that assists in maximizing the cross-computation scores of the descriptors between the generated images and the enrolled images. In this regard, the loss computation module aims to maximize comparison scores between generated images and enrolled images of other people, while minimizing comparison scores between generated images and the enrolled image of the person from which the supplementary biometrics are generated.

As noted above, prior to authentication, the unknown facial image is compared against all images in the biometric gallery (namely generated and enrolled) which yields a score distribution. Distribution analysis is a way to analyse the score distribution, which in some embodiments is performed by setting a threshold to classify risky and non-risky. Any sample comparisons from different identities below the threshold is identified as risky, as it is expected that the face feature descriptors are distinct. Any sample comparisons from different identities above the threshold is identified as non-risky.

In one embodiment, supplementary biometrics are only generated if there are enrolment biometrics in the biometric gallery that are identified as being risky. In this scenario, supplementary biometrics are generated in order to provide more samples of risky enrolments and reduce the risk overall.

During authentication of risky biometrics, cross-computation is performed on the "new" authentication biometric against both the original enrolment biometric and the supplementary biometrics generated therefrom. It is expected that the comparison scores are much closer for the "true" enrolment biometrics and further away from "other" enrolled biometrics, which otherwise would not be the case, seeing that the original enrolment biometric would have been closer to at least one face to make the gallery risky in the first place. In addition, the new authentication biometric can easily be authenticated using an authentication threshold.

Final authentication can be performed in multiple ways:
finding the best match among all the scores (the one result that has the least distance between the unknown face and the gallery);
a number of hits above a particular threshold (as there are multiple images for a single identity, a certain number of hits for a particular identity to qualify it as a match is expected).

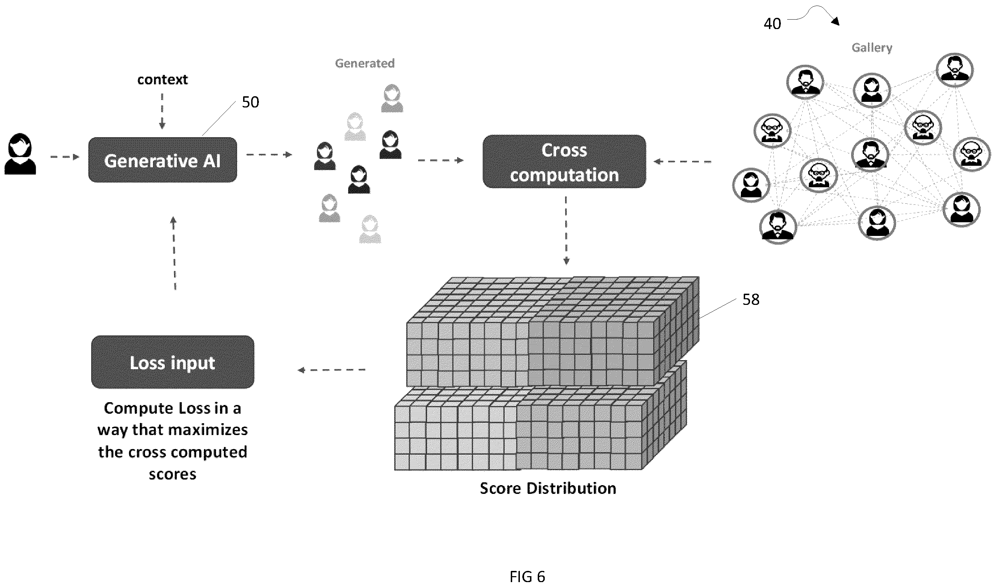

Figure 6 illustrates the generation of supplementary biometrics in the scenario where there are enrolment biometrics of two distinct people that are close to each other. As discussed above, in this scenario, the two enrolment biometrics are assigned risk scores that indicate their riskiness. While generating supplementary biometrics, the generation system ensures that the embeddings of the generated faces are close to true person (minimization) and further away from other enrolled faces (maximization)

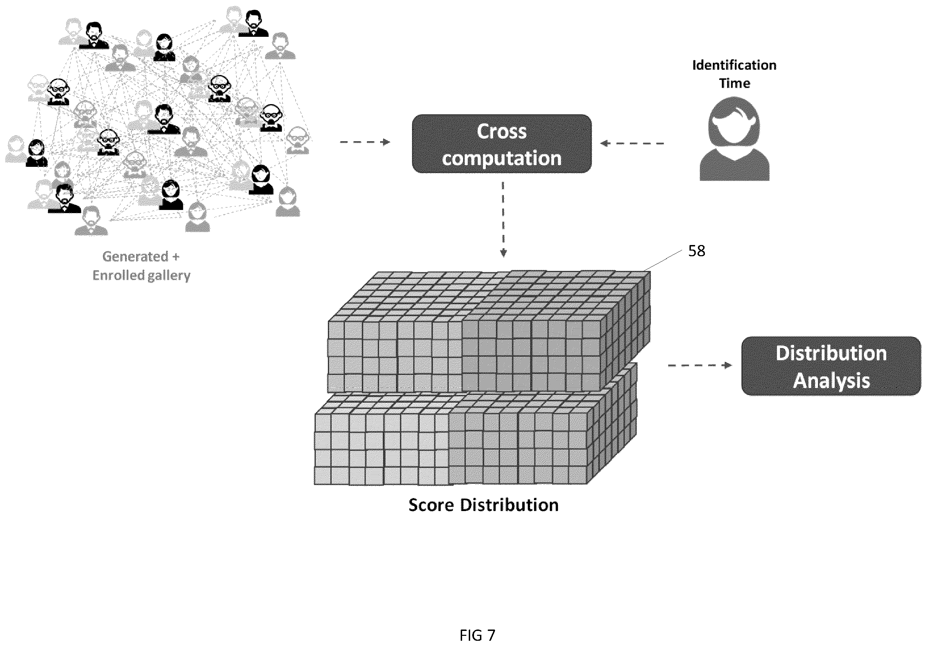

Figure 7 illustrates the 1:N comparison that occurs at the time of biometric authentication. This comparison (or "Cross Computation") is performed against all of the enrolment biometrics present in the gallery, as well as against any supplementary biometrics that have been generated.

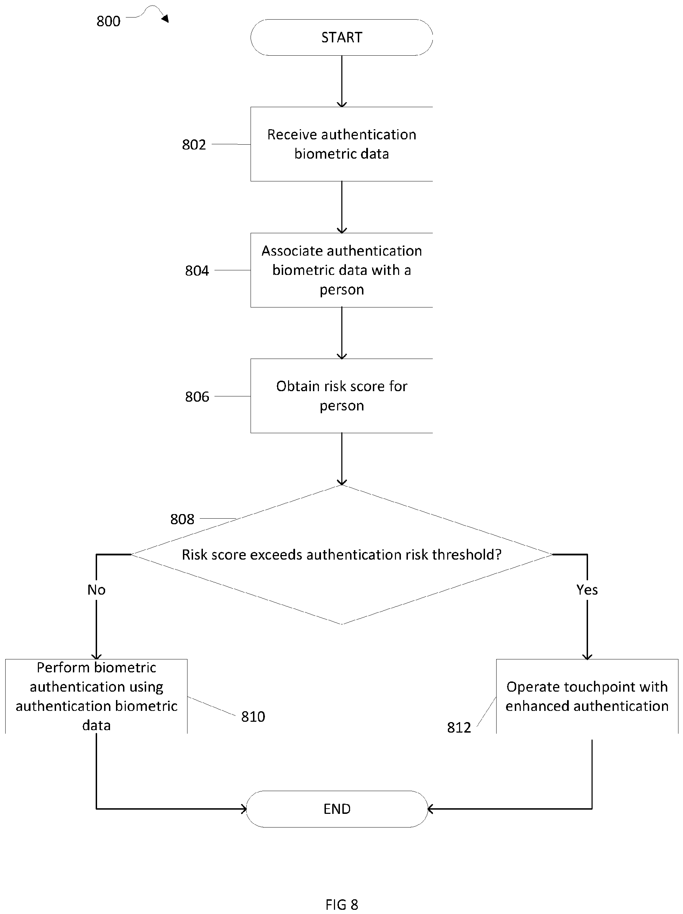

Figure 8 depicts an algorithm 800 that biometric authentication system 109 executes when a passenger presents at touchpoint 114 seeking access to the facility that the touchpoint 114 controls. For example, when touchpoint 114 controls a boarding gate, passengers who have checked into their flight and enrolled in the biometric system present at the touchpoint 114 to gain access to the boarding gate in order to board.

As the passenger approaches touchpoint 114, the inbuilt camera captures an image of the passenger that will be used in the biometric authentication process. This captured image is hereinafter referred to as an "authentication biometric". At step 802, touchpoint 114 transmits the authentication biometric to biometric authentication system 109 where it is received.

At step 804, the biometric authentication system 109 executes computing routines to associate the authentication with an individual person who is known to the biometric authentication system 109. Individuals may be known to the biometric authentication system 118 from the biometric authentication system 118 performing data exchange with other systems such as the biometric enrolment system 108 or departure control systems.

At step 806, the biometric authentication system 109 obtains (typically from biometric enrolment system 108) a risk score for the individual person identified in step 804. As described above, the biometric enrolment system 108 computes a risk score for each person as an aspect of the biometric enrolment process. The risk score quantifies, amongst other risks: the risk of the person not being identified during biometric authentication despite undergoing biometric enrolment (i.e a false negative); the risk of the biometric authentication system identifying the person as someone else in the relevant biometric gallery; and the risk of the biometric authentication system 109 incorrectly identifying a (possibly unauthorised) third party as the person (i.e a false positive).

At step 808, the biometric authentication system 808 performs a computation to determine whether the risk score exceeds an authentication risk threshold. The authentication risk threshold is dependent on the facility that the touchpoint 114 controls and the amount of risk tolerance associated therewith. In this regard, those skilled in the art will appreciate that a higher threshold would be set for facilities such as boarding gates or access to secure parts of the airport.

In the event that the risk score does not exceed the authentication risk threshold, processing proceeds to step 810, at which the biometric authentication system 808 performs biometric authentication using the authentication biometric. Biometric authentication using the authentication biometric typically involves the process described above, where the biometric authentication system 109 determines whether the authentication biometric is present in biometric gallery 119 by comparing the biometric against each biometric in the biometric gallery 119. Seeing that the biometric authentication system 808 determines that the authentication biometric is below a prescribed risk threshold before performing biometric authentication, the passenger obtains the benefits associated with biometric authentication (such as being able to board a flight without scanning a boarding pass) while the risks associated with biometric authentication (including false positives and false negatives) are reduced.

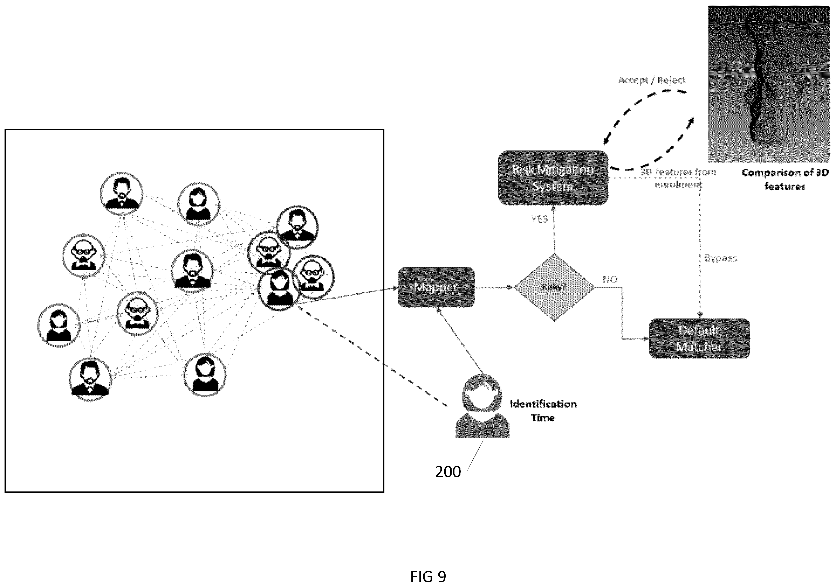

In the event that the risk score exceeds the authentication threshold, processing proceeds to step 812, at which the biometric authentication system 810 operates the touchpoint 114 to apply enhanced authentication of the passenger. Examples of enhanced authentication are illustrated in Figures 9-11. Supplementing the biometric gallery 119 with supplementary biometrics reduces incidences of the process proceeding to step 812 in favour of it proceeding to step 810.

Figure 9 illustrates enhanced authentication conducted in conjunction with biometric enrolment. In the course of the biometric enrolment system 108 conducting biometric enrolment and analysing the data in score distribution 58, the biometric enrolment system 108 determines that there is authentication risk associated with the enrolment biometric. In this instance, the biometric enrolment system, through the biometric enrolment application 112 instructs the passenger to submit another enrolment biometric and control the mobile device 104's cameras to capture a facial image that includes both 2-dimensional and 3-dimensional features. The biometric enrolment system 108 stores the additional features in association with the enrolment biometric. At the time of biometric authentication, in the event that the biometric authentication system 109 determines that the risk score exceeds the authentication risk threshold, the biometric authentication system 109 accesses the additional features and utilises the features as a second factor of authentication.

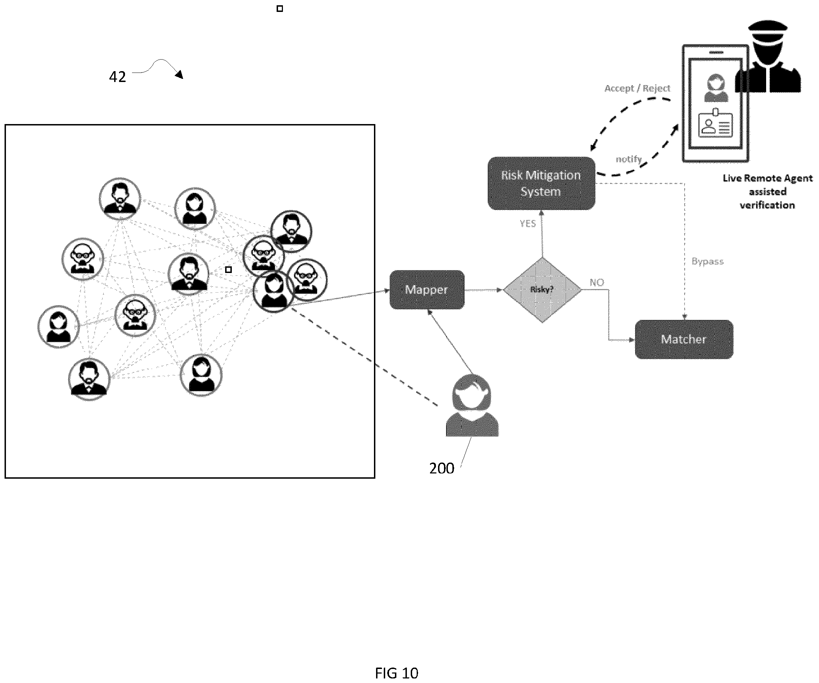

Figure 10 illustrates enhanced authentication in the form of assigning a human agent to perform a manual authentication, either as a standalone task or as a second factor of authentication to a biometric authentication. The risk scores and threshold can also be made available to airports to assist in matching staffing levels to the expected proportion of manual and automatic authentications.

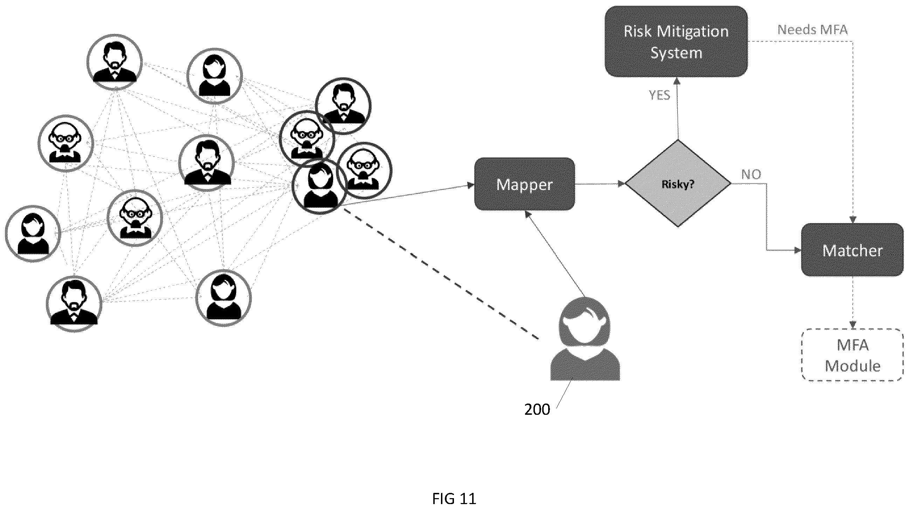

Figure 11 illustrates enhanced authentication in the form of requiring the passenger 200 to undergo a second factor of authentication such as requiring the passenger to scan their boarding pass. This second factor of authentication can be conducted in isolation or additional to the biometric authentication.

Those skilled the art will appreciate that in the context of biometric authentication, as the number N of faces in a gallery increases, more precise computations in the matching process may need to be incorporated, including differences in facial expression and differences in background lighting/shadow. The present disclosure utilises generative AI to pre-process likely changes in face image caused by expression (happiness, anger, etc.) to give rise to multiple gallery images for each passenger based on the single enrolment photo. However, the more precise computations need not be performed for all passengers owing to the metric of "riskiness" discussed above that is calculated based on the closeness of the 512 points that the computer logs for a face recognition.

Low risk facial images (i.e. those with a low value in the " riskiness" metric) can have the standard matching with a single enrolled image. High risk facial images have the further processing performed on them. The further processing can include converting a 2D image to a 3D rendering in order to increase precision in matching when the actual passenger presents themselves (changes in angle of face, shadow or expression, etc.). Risky profiles can also be asked for their boarding pass.

" Riskiness" is identified twice: once on enrolment to identify facial images that are likely to give rise to false matches (this is linked to the value N and enrolment rate); and a second time when the passenger presents themselves at the touchpoint. At the second point, agents can instigate multiple types of authentication with boarding pass, or the 3D feature computation can be done at this point. Alternatively, a threshold of N might be determined over which biometrics should not be used because the risk of false positive is too great (too many people to match, the 512 points of the face will not be sufficiently differentiable, etc).

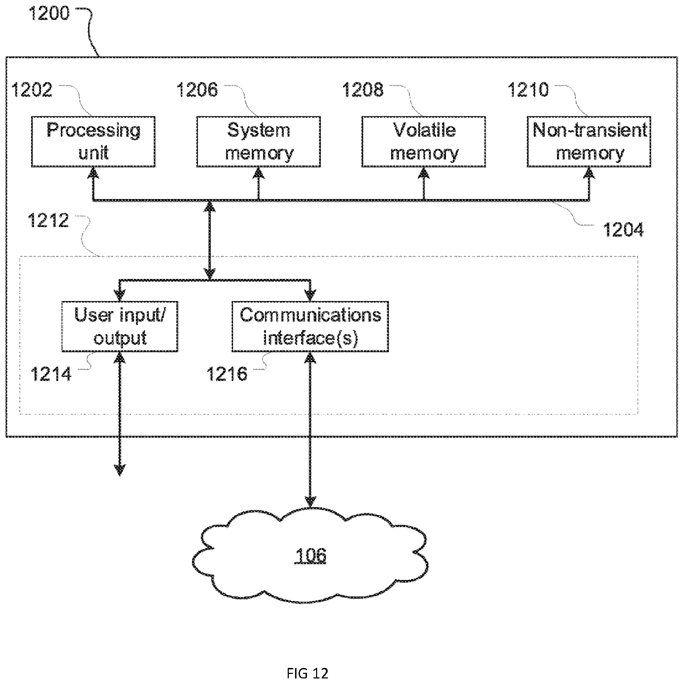

Figure 12 provides a block diagram of a computer processing system 1200 configurable to implement embodiments and/or features described herein. The touchpoint devices in accordance with embodiments of the present invention will typically incorporate at least some of the components of the computer processing system 1200. System 1200 is a general purpose computer processing system. It will be appreciated that Figure 12 does not illustrate all functional or physical components of a computer processing system. For example, no power supply or power supply interface has been depicted, however system 1200 will either carry a power supply or be configured for connection to a power supply (or both). It will also be appreciated that the particular type of computer processing system will determine the appropriate hardware and architecture, and alternative computer processing systems suitable for implementing features of the present disclosure may have alternative components to those depicted.

Computer processing system 1200 includes at least one processing unit 1202. The processing unit 1202 may be a single computer processing device (e.g. a central processing unit, graphics processing unit, or other computational device), or may include a plurality of computer processing devices. In some instances all processing will be performed by processing unit 1202, however in other instances processing may also be performed by remote processing devices accessible and useable (either in a shared or dedicated manner) by the system 1200.

Through a communications bus 1204 the processing unit 1202 is in data communication with a one or more machine readable storage (memory) devices which store instructions and/or data for controlling operation of the processing system 1200. In this example system 1200 includes a system memory 1206 (e.g. a BIOS), volatile memory 1208 (e.g. random access memory such as one or more DRAM modules), and non-volatile memory 1210 (e.g. one or more hard disk or solid state drives).

System 1200 also includes one or more interfaces, indicated generally by 1212, via which system 1200 interfaces with various devices and/or networks. Generally speaking, other devices may be integral with system 1200, or may be separate. Where a device is separate from system 1200, connection between the device and system 1200 may be via wired or wireless hardware and communication protocols, and may be a direct or an indirect (e.g. networked) connection.

Wired connection with other devices/networks may be by any appropriate standard or proprietary hardware and connectivity protocols. For example, system 1200 may be configured for wired connection with other devices/communications networks by one or more of: USB; FireWire; eSATA; Thunderbolt; Ethernet; OS/2; Parallel; Serial; HDMI; DVI; VGA; SCSI. Other wired connections are possible.

Wireless connection with other devices/networks may similarly be by any appropriate standard or proprietary hardware and communications protocols. For example, system 1200 may be configured for wireless connection with other devices/communications networks using one or more of: infrared; Bluetooth; Wi-Fi; near field communications (NFC); Global System for Mobile Communications (GSM), Enhanced Data GSM Environment (EDGE), long term evolution (LTE), wideband code division multiple access (W-CDMA), code division multiple access (CDMA). Other wireless connections are possible.

Generally speaking, and depending on the particular system in question, devices to which system 1200 connects-whether by wired or wireless means-include one or more input devices to allow data to be input into/received by system 1200 for processing by the processing unit 1202, and one or more output device to allow data to be output by system 1200. Example devices are described below, however it will be appreciated that not all computer processing systems will include all mentioned devices, and that additional and alternative devices to those mentioned may well be used.

For example, system 1200 may include or connect to one or more input devices by which information/data is input into (received by) system 1200. Such input devices may include keyboards, mice, trackpads, microphones, accelerometers, proximity sensors, GPS devices and the like. System 1200 may also include or connect to one or more output devices controlled by system 1200 to output information. Such output devices may include devices such as a CRT displays, LCD displays, LED displays, plasma displays, touch screen displays, speakers, vibration modules, LEDs/other lights, and such like. System 1200 may also include or connect to devices which may act as both input and output devices, for example memory devices (hard drives, solid state drives, disk drives, compact flash cards, SD cards and the like) which system 1200 can read data from and/or write data to, and touch screen displays which can both display (output) data and receive touch signals (input).

System 1200 may also connect to one or more communications networks (e.g. the Internet, a local area network, a wide area network, a personal hotspot etc.) to communicate data to and receive data from networked devices, which may themselves be other computer processing systems.

System 1200 may be any suitable computer processing system such as, by way of non-limiting example, a server computer system, a desktop computer, a laptop computer, a netbook computer, a tablet computing device, a mobile/smart phone, a personal digital assistant, a personal media player, a set-top box, a games console.

Typically, system 1200 will include at least user input and output devices 1214 and a communications interface 1216 for communication with a network such as network 106 of environment 100.

System 1200 stores or has access to computer applications (also referred to as software or programs)-i.e. computer readable instructions and data which, when executed by the processing unit 1202, configure system 1200 to receive, process, and output data. Instructions and data can be stored on non-transient machine readable medium accessible to system 1200. For example, instructions and data may be stored on non-transient memory 1210. Instructions and data may be transmitted to/received by system 1200 via a data signal in a transmission channel enabled (for example) by a wired or wireless network connection.

Applications accessible to system 1200 will typically include an operating system application such as Microsoft Windows^{®}, Apple OSX, Apple IOS, Android, Unix, or Linux.

System 1200 also stores or has access to applications which, when executed by the processing unit 1202, configure system 1200 to perform various computer-implemented processing operations described herein. For example, and referring to the environment of Figure. 1 above, mobile device 104 includes a biometric enrolment application 112 which configures the mobile device 104 to perform the described client system operations. Similarly, biometric enrolment server 102 includes a touchpoint service 108 which configures the touchpoint management system 102 to perform the described server system operations.

The flowcharts illustrated in the figures and described above define operations in particular orders to explain various features. In some cases, the operations described and illustrated may be able to be performed in a different order to that shown/described, one or more operations may be combined into a single operation, a single operation may be divided into multiple separate operations, and/or the function(s) achieved by one or more of the described/illustrated operations may be achieved by one or more alternative operations. Still further, the functionality/processing of a given flowchart operation could potentially be performed by different systems or applications.

Variations and modifications may be made to the parts previously described without departing from the spirit or ambit of the disclosure.

The present specification describes various embodiments with reference to numerous specific details that may vary from implementation to implementation. No limitation, element, property, feature, advantage or attribute that is not expressly recited in a claim should be considered as a required or essential feature. Accordingly, the specification and drawings are to be regarded in an illustrative rather than a restrictive sense.

In the claims which follow and in the preceding description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

## Claims

1. A method for operating a touchpoint, the method comprising a biometric authentication system:
receiving authentication biometric data;
associating the authentication biometric data with a person;
obtaining a pre-computed risk score associated with the person;
determining whether the risk score exceeds an authentication risk threshold;
operating the touchpoint to perform biometric authentication using the authentication biometric data in the event that the pre-computed risk score does not exceed the authentication risk threshold; and
operating the touchpoint with an enhanced authentication routine in the event that the pre-computed risk score exceeds the authentication risk threshold.

2. A method according to claim 1, wherein the risk score is computed by a biometric enrolment system:
receiving enrolment biometric data;
entering the enrolment biometric data into a biometric data gallery that comprises gallery biometric data;
generating supplementary biometric data from the enrolment biometric data;
entering the supplementary biometric data into the biometric data gallery; and
computing the risk score from results of biometric comparison operations performed between the enrolment biometric data and the supplementary biometric data and between the enrolment biometric data and the gallery biometric data.

3. A method according to claim 2, wherein generating supplementary biometric data from the enrolment biometric data comprises inputting the enrolment biometric data and a supplementary biometric data generation input to a generative machine learning model.

4. A method according to claim 3, wherein the supplementary biometric data generation input comprises journey context data associated with a person to whom the enrolment biometric data pertains.

5. A method according to claim 4, wherein the journey context data comprises a time window when the person is expected to be present at the touchpoint.

6. A method according to claim 3, wherein the supplementary biometric data generation input comprises lighting conditions.

7. A method according to claim 3, wherein the supplementary biometric data generation input comprises optical characteristics of a camera integrated in or associated with the touchpoint.

8. A method according to claim 3, wherein the supplementary biometric data generation input comprises data pertaining to a facial expression corresponding to an emotional state.

9. A method according to claim 1, wherein the enhanced authentication routine comprises operating the touchpoint to require the person to undergo a non-biometric authentication routine.

10. A method according to claim 9, wherein the non-biometric authentication routine comprises the person scanning a document at the touchpoint or presenting a document to a human agent.

11. A method according to claim 1, wherein the biometric authentication using the authentication biometric data comprises comparing the authentication biometric data against biometric data in a biometric data gallery of enrolled biometric data.

12. A biometric enrolment method, comprising a biometric enrolment system:
receiving enrolment biometric data;
entering the enrolment biometric data into a biometric data gallery that comprises gallery biometric data;
generating supplementary biometric data from the enrolment biometric data;
entering the supplementary biometric data into the biometric data gallery;
computing a risk score from results of biometric comparison operations performed between the enrolment biometric data and the supplementary biometric data and between the enrolment data and the gallery biometric data; and
in the event that the risk score exceeds an authentication risk threshold, performing an enhanced biometric enrolment operation.

13. A biometric enrolment method according to claim 12, wherein the enhanced biometric enrolment operation comprises the biometric enrolment system extracting additional biometric features from the enrolment biometric data.

14. A biometric enrolment method according to claim 12, wherein the enhanced biometric enrolment operation comprises the biometric enrolment system transmitting instructions to a mobile device application directing the sender of the enrolment biometric data to capture enhanced enrolment biometric data and send the enhanced enrolment biometric data to the biometric enrolment system.

15. A method according to claim 12, wherein generating supplementary biometric data from the enrolment biometric data comprises inputting the enrolment biometric data and a supplementary biometric data generation input to a generative machine learning model.

16. A method according to claim 15, wherein the supplementary biometric data generation input comprises journey context data associated with a person to whom the enrolment biometric data pertains.

17. A method according to claim 16, wherein the journey context data comprises a time window when the person is expected to be present at a touchpoint to undergo biometric authentication.

18. A method according to claim 15, wherein the supplementary biometric data generation input comprises lighting conditions.

19. A method according to claim 15, wherein the supplementary biometric data generation input comprises optical characteristics of a camera integrated in or associated with a touchpoint.

20. A method according to claim 15, wherein the supplementary biometric data generation input comprises data pertaining to a facial expression corresponding to an emotional state.

## Amended claims

### Amended claims in accordance with Rule 137(2) EPC.

1. A method for operating a touchpoint, the method comprising a biometric authentication system (109):
receiving authentication biometric data (802);
associating the authentication biometric data with a person (804);
obtaining a pre-computed risk score associated with the person (806);
determining whether the risk score exceeds an authentication risk threshold (808);
operating the touchpoint to perform biometric authentication using the authentication biometric data in the event that the pre-computed risk score does not exceed the authentication risk threshold (810); and
operating the touchpoint with an enhanced authentication routine in the event that the pre-computed risk score exceeds the authentication risk threshold (812), **characterized in that** the risk score is computed by a biometric enrolment system (108):
receiving enrolment biometric data;
entering the enrolment biometric data into a biometric data gallery (110, 119) that comprises gallery biometric data;
generating supplementary biometric data from the enrolment biometric data;
entering the supplementary biometric data into the biometric data gallery (110, 119); and
computing the risk score from results of biometric comparison operations performed between the enrolment biometric data and the supplementary biometric data and between the enrolment biometric data and the gallery biometric data.

2. A method according to claim 1, wherein generating supplementary biometric data from the enrolment biometric data comprises inputting the enrolment biometric data and a supplementary biometric data generation input to a generative machine learning model (50, 54).

3. A method according to claim 2, wherein the supplementary biometric data generation input comprises journey context data associated with a person (52A to 52C) to whom the enrolment biometric data pertains.

4. A method according to claim 3, wherein the journey context data comprises a time window when the person (52A to 52C) is expected to be present at the touchpoint (114, 115).

5. A method according to claim 2, wherein the supplementary biometric data generation input comprises lighting conditions.

6. A method according to claim 2, wherein the supplementary biometric data generation input comprises optical characteristics of a camera (54) integrated in or associated with the touchpoint (114, 115).

7. A method according to claim 2, wherein the supplementary biometric data generation input comprises data pertaining to a facial expression corresponding to an emotional state (56).

8. A biometric enrolment method, comprising a biometric enrolment system (108):
receiving enrolment biometric data;
entering the enrolment biometric data into a biometric data gallery (110, 119) that comprises gallery biometric data;
generating supplementary biometric data from the enrolment biometric data;
entering the supplementary biometric data into the biometric data gallery (110, 119);
computing a risk score from results of biometric comparison operations performed between the enrolment biometric data and the supplementary biometric data and between the enrolment data and the gallery biometric data; and
in the event that the risk score exceeds an authentication risk threshold, performing an enhanced biometric enrolment operation.

9. A biometric enrolment method according to claim 8, wherein the enhanced biometric enrolment operation comprises the biometric enrolment system (108) extracting additional biometric features from the enrolment biometric data.

10. A biometric enrolment method according to claim 8, wherein the enhanced biometric enrolment operation comprises the biometric enrolment system (108) transmitting instructions to a mobile device application directing the sender of the enrolment biometric data to capture enhanced enrolment biometric data and send the enhanced enrolment biometric data to the biometric enrolment system (108).

11. A method according to claim 8, wherein generating supplementary biometric data from the enrolment biometric data comprises inputting the enrolment biometric data and a supplementary biometric data generation input to a generative machine learning model (50, 54).

12. A method according to claim 11, wherein the supplementary biometric data generation input comprises journey context data associated with a person (52A to 52C) to whom the enrolment biometric data pertains.

13. A method according to claim 12, wherein the journey context data comprises a time window when the person is expected to be present at a touchpoint (114, 115) to undergo biometric authentication.

14. A method according to claim 11, wherein the supplementary biometric data generation input comprises lighting conditions.

15. A method according to claim 11, wherein the supplementary biometric data generation input comprises optical characteristics of a camera (54) integrated in or associated with a touchpoint (114, 115).

16. A method according to claim 11, wherein the supplementary biometric data generation input comprises data pertaining to a facial expression corresponding to an emotional state (56).
